# EUROPEAN PATENT APPLICATION

(11) **EP 2 405 130 A1**
(43) Date of publication of application: **11.01.2012**
(21) Application number: 10168803.4
(22) Date of filing: 08.07.2010
(51) Int. Cl.: F03D 1/06

(54) **Notch-reduced composite joint**

(71) Applicant: LM GLASFIBER A/S, 6000 Kolding (DK)
(72) Inventor: Nielsen, Lars, 8860, Skanderborg (DK)
(74) Representative: Pedersen, Tenna Marian

(57) **Abstract**

A wind turbine blade comprising a profiled hollow contour, at least one reinforcing beam placed between two shell body parts, the beam comprising a first beam flange and an opposing second beam flange, a beam body connected to the first beam flange by a first transition area and connected to the second beam flange by a second transition area, the beam body comprising a beam core, said beam core comprising a first outer core surface and an opposite second outer core surface, said beam body further comprises a web,
the flanges and the web being made from a fibre reinforced polymer, said web abutting at least parts of the outer core surfaces,
wherein the transition areas comprise notch-reducing means, said means comprising a part of a surface portion of the beam core.

## Description

The present invention relates to a wind turbine blade for a rotor of a wind turbine and relates also to a wind turbine comprising a wind turbine blade.

Normally, a wind turbine blade for a wind turbine comprises an aerodynamic shell made by two shell parts and at least one beam, normally two or three beams, placed between the shell parts and adhered to the inner side of the shell parts by gluing. The beams have a reinforcing function for the turbine blade during operation. The shells are often connected to each other in a trailing edge and a leading edge and normally joined by gluing, alternatively, the shell parts may be integrally formed. The blade further comprises laminates in the shells for reinforcing these shells. The beams absorb large forces during the operation of the blades, and the risk of fraction in the area close to where the beams are connected to the inside of the shells is significant. In particular, the problem with current designs lies within the relatively large difference between the maximum characteristic prying moment in the positive movement direction and the negative direction. For the current designs, a remarkable difference is seen between the loading capacities of the two loading directions, and the peel forces often exceed the capacity of the current joints.

WO 2008/086805 discloses a blade for a wind turbine with improved resistance against deformation of the shell and by incorporating an internal reinforcing floor between the trailing edge and the leading edge. However, this solution will cause more production steps and further result in a more complex structure of the blade.

A first aspect of the present invention is at least partly to overcome the disadvantages of the prior art mentioned above and to provide a wind turbine blade, where the risk of fracture and failure of the beam is reduced. These aspects and the advantages become evident from the description below and are obtained by
a wind turbine blade for a rotor of a wind turbine comprising a profiled contour formed by a hollow shell body, wherein the hollow shell body comprises
a first shell body part and a second shell body part,
at least one reinforcing beam placed between said shell body parts, the beam comprising
a first beam flange connected to an inside of the first shell part and an opposing second beam flange connected to an inside of the second shell body part,
a beam body connected to the first beam flange by a first transition area and connected to the second beam flange by a second transition area, the beam body comprising a beam core, said beam core comprising
a first outer core surface and an opposite second outer core surface, said beam body further comprises a web, the flanges and the web being made from a fibre-reinforced polymer said web abutting at least parts of the outer core surfaces, wherein the transition areas comprise notch-reducing means, said means comprising a part of a surface portion of the beam core.

By constructing a transition area with notch reducing means, it is possible to transfer forces from the web to the flanges without any risk of failure and fracture in the force transition area as the transition area is able to absorb the forces. By this construction, the loading of the joints at the leading and trailing edges will be reduced and reduces the risk of failure such as buckling.

In a second embodiment of the invention, the notch-reducing means comprises a part of the first outer core surface and a part of the second outer core surface, said core surfaces converging linearly or in a rounded shape, in the first transition area towards each other in a direction towards the first flange and in the second transition area towards each other in a direction towards the second flange.

By forming a part of the surface portion of the beam core as described, the notch-reducing effect is strengthened as the risk of air or impurities being trapped near the core is reduced.

In a third embodiment of the invention, the notch-reducing means comprises a first surface delimited by the surface portion of the beam core and a second surface opposite the first surface, a third surface connecting the first surface to the second surface, a fourth surface or edge opposite the third surface and connecting the first and second surfaces, wherein the surfaces form a chamber.

By the construction of such a chamber and advantageously the first and second surfaces or at least one of them designed in a sloping or rounded course, it has been shown that a significant notch reducing-effect is achieved. The beam will be able to transfer twice as many forces compared to the conventional way of constructing the transition area.

In a fourth embodiment of the invention, the chamber encompasses a resin. By injection of resin, the chamber is filled with a suitable material.

In a fifth embodiment of the invention, the chamber comprises filler and a resin, said filler being embedded in the resin.

By having filler in the chamber, the strength of the transition area is increased as the filler ensures that the risk of dry areas is reduced.

In a sixth embodiment of the invention, the first surface is generated by cutting or rounding the surface portion of the beam core in the transition area.

By having such a chamfer construction, it is possible to place filler material in a region close to the core. This has caused a reduction of the load factor in the beam.

In a seventh embodiment of the invention, the second surface comprises a composite material of fibre-reinforced dressing.

In an eighth embodiment of the invention, the reinforcing beam is substantially symmetrically arranged around the longitudinal axis of the beam.

In a ninth embodiment of the invention, the reinforcing beam is wrapped in reinforcing fibres/web, said fibres/web also covering the outside of the transition area.

In a tenth embodiment of the invention, the second surface comprises beam-reinforcing fibres and is concave-formed in the direction of the hollow shell body, and convex-formed in the direction of the chamber, by which the second surface and the third surface form an angle of less than 90°.

In an eleventh embodiment of the invention, the filler is a fibre rope e.g. comprising glass fibres and arranged at the first surface, said fibre rope extending along the core body in the transition areas.

In this way, the filler is laid out or arranged in an easy manner. However, also glass waste in various geometrical shapes, such as powder, small rounded or edged particles, could be used. By using such filler, the risk of areas with dry spots is reduced.

In a twelfth embodiment of the invention, the core material is foam such as a foamed polymer.

In a thirteenth embodiment of the invention, the reinforcing beam is I-shaped in cross section.

In a fourteenth embodiment of the invention, a wind turbine comprises a wind turbine blade according to any of the preceding claims.

In a fifteenth embodiment of the invention, the filler is a glass fibre rope, and preferably a unidirectional rope.

By using a rope as filler, the risk of fracture is reduced as this material has a sufficient strength. Another material that could be used is woven glass rope.

In a sixteenth embodiment of the invention, the diameter of the glass fibre rope is 6-15 mm, preferably 9-12 mm.

In a seventeenth embodiment of the invention, the diameter of the glass fibre rope is dependent on an angle between the first surface and the third surface, the larger angle the larger diameter

In an eighteenth embodiment of the invention, a curvature radius of the second surface is a function of the thickness of the beam core, said curvature radius is increased when the thickness of the beam core is increased.

In a nineteenth embodiment of the invention, a curvature radius of the first surface is a function of the thickness of the beam core, said curved radius is increased when the thickness of the beam core is increased.

In a twentieth embodiment of the invention, the hollow shell body is a profile contour in the radial direction and divided into a root region with a substantially circular or elliptical profile closest to the hub, an airfoil region with a lift generating profile furthest away from the hub, and preferably a transition region between the root region and the airfoil region, the transition region having a profile gradually changing in the radial direction from the circular or elliptical profile of the root region to the lift generating profile of the airfoil region.

In a twenty-first embodiment of the invention, the connection between the inner side of the shell bodies and the flange of the beam is a bonding agent such as glue.

In a twenty-second embodiment of the invention, the filler material comprises glass fibres or carbon, steel, aramid or plant fibres.

In a twenty-third embodiment of the invention, at least a reinforcing beam is placed in the airfoil region and in the transition region.

In a twenty-fourth embodiment of the invention, the web provided in the transition region at one side is delimited by the second surface, and the web at the outside in the transition area is formed in a curved and concave design in the direction of the hollow shell body.

In a twenty-fifth embodiment of the invention, the chamber provided in the transition region at one side is delimited by the first surface, and the surface is convex-formed in the direction of the chamber.

In a twenty-sixth embodiment of the invention the first shell body part and the second body part are connected to each other at a trailing edge and a leading edge.

In a twenty-seventh embodiment of the invention, the first shell body part forms part of a pressure side, and the second shell part may form part of the suction side.

In a twenty-eighth embodiment of the invention, the notch-reducing means are delimited by the beam core and the web and flange.

In a twenty-ninth embodiment of the invention the chamber is triangular-formed in cross-section, the fourth surface being an edge.

In a thirteenth embodiment of the invention, the chamber is trapezoid-formed in cross-section, the fourth surface having a length being smaller than the third surface.

In a thirty-first embodiment of the invention, the distance between the first outer core surface and the second outer core surface increases towards the first beam flange and towards the second beam flange.

The invention is explained in greater detail below with reference to the drawings, in which
Fig. 1 shows a wind turbine,
Fig. 2 shows a perspective view of a conventional wind turbine blade,
Fig. 3 shows a schematic view of an airfoil profile,
Fig. 4 shows a wind turbine blade, which has been cut through,
Fig. 5 is a cross section of a part of a wind turbine blade and a reinforcing beam according to the invention, and
Fig. 6 is a cross section of a part of a reinforcing beam showing details of the transition area.

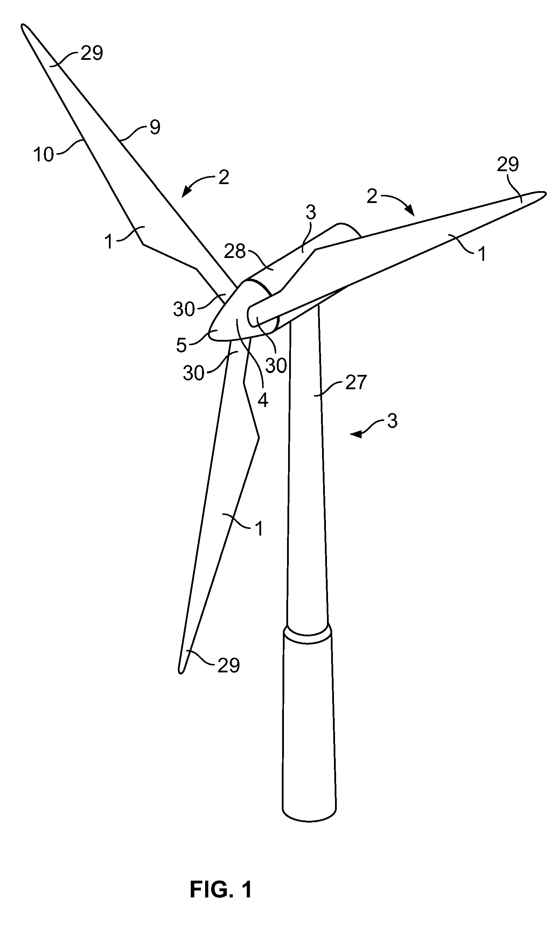

Fig. 1 illustrates a conventional, modern upwind turbine according to the so-called "Danish concept" with a tower 27, a nacelle 28 and a rotor 2 with a substantially horizontal rotor shaft 4. The rotor 2 includes a hub 5 and three blades 1, extending radially from the hub 5, each having a blade root 30 nearest the hub, and a blade tip 29 furthest from the hub 5.

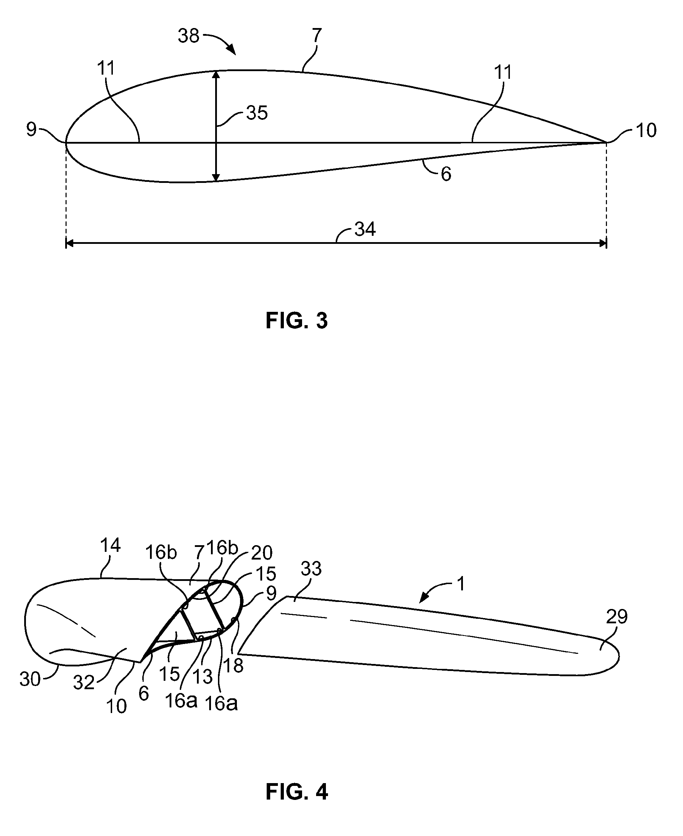

Fig. 3 shows a schematic view of an airfoil profile 38 of a typical blade of a wind turbine depicted with the various parameters, which are typically used to define the geometrical shape of an airfoil. The airfoil profile 38 has a pressure side 6 and a suction side 7, which during use, i.e. during rotation of the rotor, normally face towards the windward side and the rearward side, respectively. The airfoil 38 has a chord 11 with a chord length 34 extending between a leading edge 9 and a trailing edge 10 of the blade. The airfoil 38 has a thickness 35, which is defined as a distance between the pressure side 6 and the suction side 7. The thickness 35 of the airfoil varies along the chord 11.

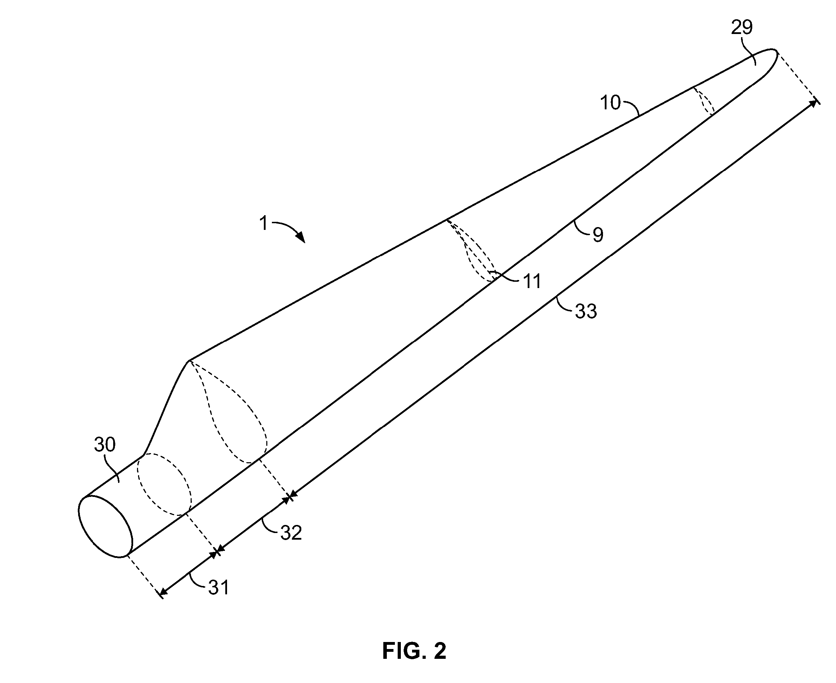

As seen from Fig. 2, the conventional blade 1 comprises a root area 31 closest to the hub, an airfoil area 33 furthest away from the hub, and a transition area 32 between the root area 31 and the airfoil area 33. The blade 1 comprises the leading edge 9 facing the direction of rotation of the blade 1 when the blade is mounted on the hub, and the trailing edge 6 facing in the opposite direction to the leading edge 9. The airfoil area 33 has an ideal or almost ideal blade shape, whereas the root area 31 has a substantially circular cross-section, which reduces storm loads and makes it easy and safe to mount the blade 1 to the hub. Preferably, the diameter of the root area 31 is constant along the entire root area 31. The transition area 32 has a shape, gradually changing from the circular shape of the root area 31 to the airfoil profile of the airfoil area 33. The width of the transition area 32 increases substantially linearly with the increasing distance from the hub.

The airfoil area 33 has an airfoil profile with a chord plane 11 extending between the leading edge 9 and the trailing edge 10 of the blade 1. The width of the chord plane decreases with increasing distance L from the root area 31. It should be noted that the core plane does not necessarily run straight over its entire extent since the blade may be twisted and/or curved, thus providing a chord plane with a correspondingly twisted and/or curved course, this most often being the case in order to compensate for the local velocity of the blade being dependent on the radius from the hub. Due to the circular cross section, the root area 31 does not contribute to the production of the wind turbine and, in fact, lowers the production a little because of the wind resistance.

Fig. 4 shows a perspective view of a blade 1, which has been cut through in such a way that the cross-sectional view of the blade is visible and showing the position of two reinforcing beams 15. The blade 1 comprises a root section 30 and a blade tip 29, and therebetween the transition area 32 and the airfoil area 33. The blade 1 comprises a first shell body part 13 and a second shell body part 14, which are connected to each other at a leading edge 9 and a trailing edge 10. The reinforcing beams 15 are arranged between the two shell body parts 13, 14. In the depicted embodiment, two substantially parallel beams 15 are placed with a first beam flange 16a connected to the inside part 18 of the first shell body part 13 and the second flange 16b connected to the inside 20 of the second shell body part, the connection takeing place by gluing. The beams are placed in the transition area 32 and at least a part of the airfoil area 33. The blade is manufactured in a conventional way and by a material such as composite-consisting fibre-reinforced plastics (resin such as polyester, vinylester or epoxy), bamboo or wood.

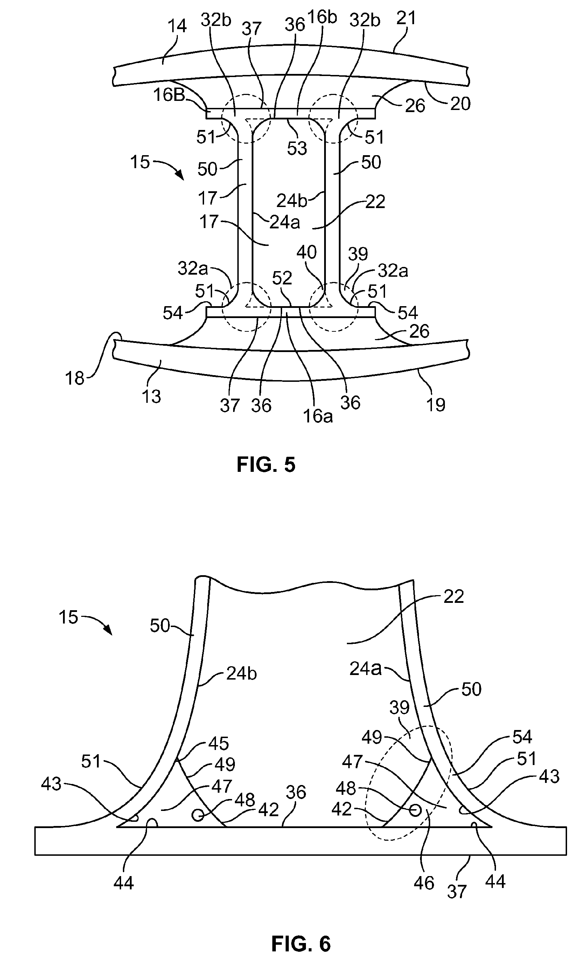

Fig. 5 is a cross section of a reinforcing beam 15 according to one embodiment of the invention and shows a detailed picture of one of the beams 15 shown in Fig. 4. The beam 15 comprises a beam core 22, which is advantageously made by a foam material. The beam core 22 is defined by a first outer core surface 24a, an opposite second outer core surface 24b, a third outer core surface 52 and a fourth outer core surface 53 also placed opposite each other and connecting the first and second core surfaces 24a, 24b. The cross section of the beam core 22 is rectangular with rounded corners. The first and second outer core surfaces 24a, 24b are covered by a web 50, the web being formed in a fibre-reinforced resin and abutting parts of the first and second outer core surfaces 24a, 24b.

The third 52 and fourth 53 core surfaces are abutting an inner surface 36 of the beam flanges 16 a,b, the beam flange being made of a fibre-reinforced resin material.

The beam core 22 and the web 50 form a beam body 17. The first beam flange 16a and the second beam flange 16b comprises an outer surface 37, which is facing towards the inside of the first and second shell body parts, and the opposing inner surface of the flange 36 faces the beam core 21 and abuts end portions of the beam core, i.e. the third 52 and fourth 53 core surfaces.

A part of the outer surface of the flange 37 is bonded to the inner surfaces 18, 20 of the shells by glue 26 or similar bonding. The beam flanges 16 might be symmetrically arranged around the longitudinal axes of the beam core 22. By such a construction, it might be easier to place the flanges and the reinforcing beam correct in relation to the shell body parts and ensure that sufficient glue is applied.

In the area between the beam body 17 and the beam flanges 16, a transition area 32 is connecting the beam flanges 16 to the beam body 17. The transition area 32 transfers the forces between the beam body 17 and the flanges 16 of the beam and comprises notch-reducing means by which the risk of fracture of the beam is reduced. The transition area comprises a first transition area 32a and an opposing second transition area 32b, said first transition being defined as the transition area closest to the first shell body part 13, and the second transition area being defined as the transition area closest to the second shell body part 14. In this case the cross section of the beam is an I-form, and there will be four transition areas in all; two first transition areas 32a and two second transition areas 32b. However, a reinforcing beam designed as a C-form comprises only one first transition area and one second transition area.

The first and second transition areas 32a, 32b each comprise an outer transition area 39 and an inner transition area 40. The outer transition area 39 comprises a flange area placed between the outer surface of the flange and the web 50 - named web connecting flange part 54 - and is connected integrally with the web 50 that covers the core beam 22. The outer surface 51 of the web connecting flange part 54 is concavely curved with a radius of the curvature that is dependent on the thickness of the web 50. It is quite important that the fibre-reinforced resin in this area is made in one piece as this will increase the ability to transport the forces in the region without any fracture in the transition area. The outer transition area comprises a second surface 43, which is a part of the web connecting flange part.

The transition area further comprises an inner transition area 40 that comprises a first surface 42, which is a part of the outer core surfaces 24a, 24b. This surface is normally formed by cutting a levelled chamfer 49 in the corners of the beam core 22. By having such a levelled chamfer or a rounded surface, the stresses in this region is reduced and the risk of fracture is reduced. In case the surface is in a rounded shape, the radius of the curvature is dependent on the thickness of the web 50. The thicker the web is, the larger the radius of the curvature is.

Fig. 6 shows a part of a reinforcing beam 15 comprising the beam core 22. The opposing sides of the beam core 22, i.e. the first outer core surface 24a and the second outer core surface 24b, are covered with a web 50, said web being a fibre-reinforced resin. The web 50 continues in the web connecting flange part 54 towards the flange and is delimited by the curved web surface 51 with a radius of the curvature that is a function of the thickness of the web 50.

In the area of the inner transition area 39, the beam core 22 is provided with a chamfer 49, which forms the first surface 42, the chamfer on both sides converting towards each other. The chamfer is made by cutting off parts in this region of the foam material before the beam core is placed in the shells during the production of the turbine blade. It has been shown that a notch-reducing effect is obtained when the core is rounded in this area.

Opposite the first surface is a second surface 43, which is a part of the web connecting flange part 54. The first 42 and the second 43 surfaces are connected to each other by a third surface 44 that is a part of the flange, the inner surface of the flange 36. Finally, opposite this third surface 44, the first surface 42 and the second surface 43 are joined in a fourth surface/edge 45. In this way, a chamber 46 is obtained defined by the 4 surfaces. This chamber has also an impact on the notch-reducing effect in the transition area and increases the resistance against cracking and failure.

Advantageously, this chamber 46 is filled with resin 47 and a filler 48, said filler could be small particles of glass or it could be a glass fibre rope, preferably an unidirectional rope or a non-woven glass fibre rope. By using such filler material, it is easier for the resin to wet it completely and, in this way, avoid dry spots. The diameter of the glass fibre rope is normally between 6-15 mm, preferably between 9-12 mm, but it depends on the geometry and size of the chamfer 49.

Advantageously, the filler 48 is placed close to the first surface 42 and placed throughout its length.

In case the blade is formed with two I-shaped beams, eight glass fibre ropes will be placed close to the first surface and before the reinforced webs are laid down and covering the core and the flanges. Afterwards, the resin is injected into the chambers.

### List of reference numerals

1) Blade
2) Water
3) Wind turbine
4) Rotor shaft
5) Hub
6) Pressure side
7) Suction side
8) Profiled contour
9) Leading edge
10) Trailing edge
11) Cord
12) Reinforcement of the shells
13) First shell body part
14) Second shell body part
15) Reinforcing beam
16) Beam flange
16a) First beam flange
16b) Second beam flange
17) Beam body
18) Inner surface of the first shell body part
19) Outer surface of the first shell body part
20) Inner surface of the second shell body part
21) Outer surface of the second shell body part
22) Beam core
24a) First outer core surface
24b) Second outer core surface
25) Outer surface of the beam layer
26) Glue adhesive
27) Tower
28) Nacelle
29) Blade tip
30) Blade root
31) Root area
32) Transition area 32a) First transition area 32b) Second transition area
33) Airfoil area
34) Cord length
35) Airfoil thickness
36) Inner surface of the flange
37) Outer surface of the flange
38) Airfoil profile
39) Outer transition area
40) Inner transition area
41) Filler
42) First surface
43) Second surface
44) Third surface
45) Fourth surface/edge
46) Chamber
47) Resin
48) Filler
49) Chamfer
50) Web
51) Outer surface of 54
52) Third outer core surface
53) Fourth outer core surface 54 Web connecting flange part

## Claims

1. A wind turbine blade for a rotor of a wind turbine comprising a profiled contour formed by a hollow shell body, wherein the hollow shell body comprises
a first shell body part and a second shell body part,
at least one reinforcing beam placed between said shell body parts, the beam comprising
a first beam flange connected to an inside of the first shell part and an
opposing second beam flange connected to an inside of the second shell body part,
a beam body connected to the first beam flange by a first transition area and connected to the second beam flange by a second transition area, the beam body comprising a beam core, said beam core comprising
a first outer core surface and an opposite second outer core surface,
said beam body further comprises
a web,
the flanges and the web being made from a fibre reinforced polymer, said web abutting at least parts of the outer core surfaces,
**characterised in that** the transition areas comprise notch-reducing means, said means comprising a part of a surface portion of the beam core.

2. A wind turbine blade according to claim 1, wherein the notch-reducing means comprises a part of the first outer core surface and a part of the second outer core surface, said core surfaces converging linearly or in a rounded shape, in the first transition area towards each other in a direction towards the first flange and in the second transition area towards each other in a direction towards the second flange.

3. A wind turbine blade according to claims 1-2, wherein the notch-reducing means comprises a first surface delimited by the surface portion of the beam core and a second surface opposite the first surface, a third surface connecting the first surface to the second surface, a fourth surface or edge opposite the third surface and connecting the first and second surfaces, wherein the surfaces form a chamber.

4. A wind turbine blade according to claim 3, wherein the chamber encompasses a resin.

5. A wind turbine blade according to claims 3-4, wherein the chamber comprises filler and a resin, said filler being embedded in the resin.

6. A wind turbine blade according to claims 3-5, wherein the first surface is generated by cutting or rounding the surface portion of the beam core in the transition area.

7. A wind turbine blade according to claims 3-6, wherein the second surface comprises a composite material of fibre-reinforced layer.

8. A wind turbine blade according to any of the preceding claims, wherein the reinforcing beam is substantially symmetrically arranged around the longitudinal axis of the beam.

9. A wind turbine blade according to any of the preceding claims, wherein the reinforcing beam is wrapped in reinforcing fibres/web, said fibres/web also covering the outside of the transition area.

10. A wind turbine blade according to claims 2-9, wherein the second surface comprises beam-reinforcing fibres and is concave-formed in the direction of the hollow shell body, and convex-formed in the direction of the chamber, by which the second surface and the third surface form an angle of less than 90°.

11. A wind turbine blade according to claim 5-10, wherein the filler is a fibre rope e.g. comprising glass fibres and arranged at the first surface, said fibre rope extending along the core body in the transition areas.

12. A wind turbine blade according to any of the preceding claims, wherein the core material is foam such as a foamed polymer.

13. A wind turbine blade according to any of the preceding claims, wherein the reinforcing beam is I-shaped in cross section.

14. A wind turbine comprising a wind turbine blade according to any of the preceding claims.
